# EUROPÄISCHE PATENTANMELDUNG

(11) **EP 4 372 965 A1**
(43) Veröffentlichungstag der Anmeldung: **22.05.2024**
(21) Anmeldenummer: 22208209.1
(22) Anmeldetag: 18.11.2022
(51) Int. Cl.: H02K 1/04, H02K 1/2753

(54) **SEGMENTIERTER ROTOR FÜR EINEN NUTENLOSEN, ELEKTRONISCH KOMMUTIERTEN ELEKTROMOTOR UND ELEKTROMOTOR MIT EINEM DERARTIGEN ROTOR**

(71) Anmelder: maxon international ag, 6072 Sachseln (CH)
(72) Erfinder: KREHER, Johannes, 6078 Lungern (CH); WICKI, Björn, 6003 Luzern (CH)
(74) Vertreter: Grünecker Patent- und Rechtsanwälte PartG mbB

(57) **Zusammenfassung**

Die vorliegende Erfindung betriff einen Rotor für einen Elektromotor mit einem nutenlosen Stator und einer elektronischen Kommutierung, wobei der Rotor Permanentmagnetsegmente aufweist. Erfindungsgemäß ist vorgesehen, dass die Permanentmagnetsegmente zumindest über einen axialen Bereich des Rotors entlang zumindest einer Schnittebene voneinander beabstandet sind und der Rotor zwischen den Permanentmagnetsegmenten entlang der zumindest einen Schnittebene jeweils eine elektrische Isolierung aufweist, wobei eine Normal der jeweiligen Schnittebene senkrecht zur axialen Richtung des Rotors und senkrecht zu einer q-Achse des Rotors verläuft, in einem Fall, dass der Rotor ein Polpaar aufweist, und senkrecht zu einer von mehreren q-Achsen des Rotors verläuft, in einem Fall, dass der Rotor mehr als ein Polpaar aufweist.

## Beschreibung

Die vorliegende Erfindung bezieht sich auf einen Rotor für einen Elektromotor mit einem nutenlosen Stator und einer elektronischen Kommutierung gemäß dem Oberbegriff des unabhängigen Anspruchs 1 und auf einen Elektromotor mit einem derartigen Rotor gemäß dem Oberbegriff des Anspruchs 15.

Ein Rotor nach dem Oberbegriff des unabhängigen Anspruchs 1 weist dabei Permanentmagnetsegmente auf.

Bei elektronisch kommutierten Elektromotoren werden durch die Pulsweitenmodulation (PWM) der Leistungselektronik zusätzliche Verluste in den Elektromotor induziert. Diese Verluste sind bei niederinduktiven Motoren wie elektrisch kommutierten Elektromotoren mit nutenlosen Statoren besonders groß. Der ausschlaggebende Haupteffekt sind hierbei Wirbelströme im Rotor, wobei bei fester Zwischenkreisspannung die Zusatzverluste bei einem Tastgrad von 50% maximal sind. Für dieses bekannte Problem gibt es bereits bekannte Lösungsansätze, die aber mit zusätzlichen Problemen behaftet sind.

Ein bekannter Ansatz ist die Verwendung von zusätzlichen Induktivitäten in der Elektronik, wodurch der Stromrippel und somit die Verluste reduziert werden können. Je nach System werden aber diese zusätzlichen Induktivitäten groß, schwer und teuer. Zusätzlich fallen ohmsche Verluste in diesen Bauelementen an, wodurch dieser Ansatz wenig vorteilhaft ist.

Daneben ist bekannt, die Wicklungs- und/oder Zwischenkreisspannung so zu wählen, dass der Tastgrad bei nahezu 100% liegt. Dadurch wird das Problem der PWM induzierten Verluste vermieden. Dies ist aber ohne Anpassung der Zwischenkreisspannung nur bei Motoren möglich, die hauptsächlich bei der maximalen Drehzahl betrieben werden. Wenn der Betrieb bei unterschiedlichen Drehzahlen erfolgen soll, bedarf es einer aufwendigen und teuren Steuerung, um die Zwischenkreisspannung anzupassen, worunter zusätzlich noch die Dynamik der Steuerung leidet. Zusätzlich löst dieser Ansatz das Problem bei Sinuskommutierungen nur teilweise, da die Spannung einen sinusförmigen Verlauf hat und damit der Tastgrad von Null bis zum Maximum stetig geändert wird.

Ein weiterer bekannter Ansatz ist die axiale Segmentierung des Rotors in Permanentmagnetsegmente, wobei der Rotor entlang von Schnittebenen, deren Normalen in die axiale Richtung des Rotors zeigen, segmentiert ist und die einzelnen Permanentmagnetsegmente voneinander elektrisch isoliert werden. Für eine effektive Unterdrückung der Wirbelströme braucht es hierbei aber eine Vielzahl von derartigen Permanentmagnetsegmenten, da die axiale Dicke der Permanentmagnetsegmentscheiben kleiner als deren Durchmesser sein sollte. Dies macht diesen Ansatz aufwendig zu fertigen und teuer.

Die Aufgabe der vorliegenden Erfindung besteht daher darin, einen Rotor für einen Elektromotor mit einem nutenlosen Stator und einer elektronischen Kommutierung bereitzustellen, der die durch die Pulsweitenmodulation (PWM) der Leistungselektronik zusätzlichen induzierten Verluste verringert und dabei die oben beschriebenen Probleme der unterschiedlichen, bekannten Ansätze umgeht oder zumindest mindert.

Die Aufgabe wird durch die Merkmale des unabhängigen Anspruchs 1 gelöst. Demnach wird bei einem gattungsgemäßen Rotor die Aufgabe erfindungsgemäß dadurch gelöst, dass die Permanentmagnetsegmente zumindest über einen axialen Bereich des Rotors entlang zumindest einer Schnittebene voneinander beabstandet sind und der Rotor zwischen den Permanentmagnetsegmenten entlang der zumindest einen Schnittebene jeweils eine elektrische Isolierung aufweist, wobei eine Normale der jeweiligen Schnittebene senkrecht zur axialen Richtung des Rotors und senkrecht zu einer q-Achse des Rotors verläuft, in einem Fall, dass der Rotor ein Polpaar aufweist, und senkrecht zu einer von mehreren q-Achsen des Rotors verläuft, in einem Fall, dass der Rotor mehr als ein Polpaar aufweist.

Eine Ausdehnung der Schnittebenen in axialer Richtung ist dabei auf den axialen Bereich des Rotors begrenzt, wobei der axiale Bereich des Rotors vorzugsweise mindestens 90%, besonders bevorzugt mindestens 95%, der axialen Länge des Rotors umfasst.

Durch die erfindungsgemäße Lösung können die durch die PWM-induzierten Wirbelströme im Rotor effektiv unterbunden werden. Dabei bedarf es einer deutlich geringeren Anzahl an Permanentmagnetsegmenten als bei dem bekannten Ansatz mit Schnitteben mit Normalen in axialer Richtung des Rotors. Dadurch ist der Rotor deutlich einfacher und kostengünstiger zu fertigen.

Vorteilhafte Ausgestaltungen der vorliegenden Erfindung sind Gegenstand der Unteransprüche.

In einer besonders bevorzugten Ausführungsform der vorliegenden Erfindung ist die elektrische Isolierung mittels eines Luftspalts, eines isolierenden Materials, wie vorzugsweise einer Vergussmasse, Kunststofffolien oder -plättchen, Papier oder einer Beschichtung, wie vorzugsweise eines elektrisch isolierenden Klebers, erzeugt. Durch eine effektive elektrische Isolierung werden die induzierten Wirbelströme der PWM wirksam unterbunden.

In einer weiteren bevorzugten Ausführungsform der vorliegenden Erfindung ist zwischen den Permanentmagnetsegmenten entlang der Schnittebene/n ein weichmagnetisches Material eingebracht, dass mittels der elektrischen Isolierung von den Permanentmagnetsegmenten elektrisch isoliert ist. Dadurch wird die Induktivität in Richtung der q-Achse/n vergrößert, wodurch der Stromrippel reduziert werden kann und damit zusätzlich noch die induzierten Wirbelströme reduziert werden können.

Vorzugsweise ist das weichmagnetische Material als Blech oder Blechpaket ausgeführt, wobei eine Blechungsrichtung entweder parallel zu der Normalen der jeweiligen Schnittebene oder in axialer Richtung des Rotors verläuft. Dies ermöglicht die Bildung einer betragsmäßig-hohen Induktivität auf eine einfach und kostengünstig zu fertigende Art.

In einer bevorzugten Ausführungsform liegt eine Sättigungsfeldstärke des weichmagnetischen Materials über der Flussdichte des Rotors, wobei vorzugsweise das weichmagnetische Material aus FeSi-Blechen, aus FeNi-Blechen oder aus einem Soft Magnetic Composite besteht. Dadurch kann eine Sättigung des weichmagnetischen Materials verhindert werden, was die Effektivität in der Verhinderung der Verluste durch PWM-induzierte Wirbelströme gewährleistet.

Gemäß einer weiteren besonders bevorzugten Ausführungsform beträgt ein Abstand zwischen den Permanentsegmenten in Richtung der Normalen der jeweiligen Schnittebene über mindestens 50% der Ausdehnung der Schnittebene parallel zu der q-Achse innerhalb eines Außenumfangs des Rotors weniger als 8%, vorzugsweise weniger als 5%, des Rotordurchmessers. Dadurch können die Permanentsegmente in Relation zum Rotordurchmesser ausreichend groß ausgebildet werden.

In einer weiteren bevorzugten Ausführungsform weist das Blechpaket eine Blechungsrichtung parallel zu der Normalen der jeweiligen Schnittebene und weniger als neun, vorzugsweise weniger als fünf, Bleche auf. Als Blechungsrichtung wir die Richtung bezeichnet in welcher die Bleche aufeinandergelegt beziehungsweise gestapelt werden. Die Blechungsrichtung liegt somit senkrecht beziehungsweise orthogonal zur Blechebene.

In einer anderen bevorzugten Ausführungsform weist das Blechpaket die Blechungsrichtung in axialer Richtung des Rotors auf und eine Ausdehnung des Blechpakets in Richtung der Normalen der jeweiligen Schnittebene vergrößert sich am Außenumfang des Rotors. Dadurch kann mehr hochfrequentes Feld in das Blechpaket geleitet werden, was einen positiven Effekt auf die Reduzierung der Verluste durch PWM-induzierte Wirbelströme hat. Außerdem werden die Bleche durch den Formschluss mit den Permanentmagnetsegmente im Rotor positioniert.

Gemäß einer weiteren bevorzugten Ausführungsform weist der Rotor nur ein Polpaar und mehr als zwei, vorzugsweise drei, Permanentmagnetsegmente auf, wobei die Schnittebenen vorzugsweise achsensymmetrisch zur q-Achse des Rotors angeordnet sind. Bei Rotoren mit nur einem Polpaar können durch die Verwendung von mehr als zwei Permanentmagnetsegmenten die Verluste durch PWM-induzierte Wirbelströme weiter reduziert werden. Dabei sind zumeist drei Permanentmagnetsegmente ausreichend.

Gemäß einer anderen bevorzugten Ausführungsform weist der Rotor mehr als ein Polpaar auf und die Schnittebenen des Rotors verlaufen entlang der q-Achsen des Rotors. Bei mehr als ein-polpaarigen Rotoren bilden sich mehr als eine q-Achse. Indem die Schnittebenen entlang jeder dieser q-Achsen verlaufen, können PWM-reduzierte Wirbelströme im gesamten Rotorumfang effektiv verhindert werden.

In einer weiteren besonders bevorzugten Ausführungsform der vorliegenden Erfindung sind die Permanentmagnetsegmente elektrisch isoliert zueinander verklebt. Durch die Segmentierung ist der Rotoraufbau fragiler. Durch die Verklebung kann aber ein ausreichend stabiler Rotor hergestellt werden.

Gemäß einer bevorzugten Ausführungsform der vorliegenden Erfindung sind Wellenstummel an die Stirnseiten des Rotors geklebt. Insbesondere bei Ausführungsformen des Rotors mit nur einem Polpaar ist eine durchgehende Welle weniger praktikabel, da hier Wirbelströme über die Welle verlaufen könnten. Um dies zu verhindern, werden Wellenstummel eingesetzt.

In einer weiteren bevorzugten Ausführungsform der vorliegenden Erfindung ist der Rotor mit einer elektrisch nicht leitfähigen Kapselung umgeben, wobei diese vorzugsweise ein Carbonfaserschlauch oder einer Keramikhülse ist oder aus einer Kunstharz-Laminierung der Außenfläche besteht. Dadurch kann die Stabilität weiter verbessert werden. Der Carbonfaserschlauch hat dabei den zusätzlichen Vorteil, dass Carbonfasern einen ähnlichen Ausdehnungskoeffizienten wie Magnetmaterial hat. Damit ist der Rotor robust gegen Temperaturwechsel.

In einer anderen bevorzugten Ausführungsform macht der axiale Bereich, bei welchem die Permanentmagnetsegmente voneinander beabstandet sind, nur ein Teilbereich der gesamten Achslänge des Rotors aus und die Permanentmagnetsegmente sind an einem axialen Ende des Rotors in einem Endabschnitt, der vorzugsweise weniger als 10 %, besonders vorzugsweise weniger als 5%, der axialen Länge des Rotors aufweist, unsegmentiert ausgeführt. Dadurch kann die Fragilität des Rotors verringert werden und die PWM-induzierten Wirbelströme dennoch verringert werden. Die Ausführungsform mit derartigem Endabschnitt ist besonders bevorzugt bei Rotoren mit nur einem Polpaar angewendet.

In einer anderen bevorzugten Ausführungsform ist der Rotor als vierpoliger Halbach-Rotor aus acht Permanentmagnetsegmenten ausgebildet, wobei Permanentmagnetsegmente an den Schnittebenen entlang der q-Achsen elektrisch voneinander isoliert sind und diese Schnittebenen mit weichmagnetischen Blechen versehen sind, die ebenfalls von den Permanentmagnetsegmenten elektrisch isoliert sind.

Des Weiteren bezieht sich die vorliegende Erfindung auf einen Elektromotor mit einem nutenlosen Stator und einer elektronischen Kommutierung, wobei der Elektromotor einen Rotor gemäß zumindest einer der oben beschriebenen Ausführungsformen aufweist.

Im Folgenden werden nicht einschränkende Ausführungsformen der vorliegenden Erfindung anhand beispielhafter Zeichnungen näher erläutert.

In den Zeichnungen zeigen:
- Figur 1:: eine Schnittansicht auf ein Ausführungsbeispiel eines erfindungsgemäßen Rotors mit einem Polpaar, einer Schnittebene und einem Blechpaket mit Blechungsrichtung parallel zu der Normalen der Schnittebene,
- Figur 2:: eine Schnittansicht auf ein zweites Ausführungsbeispiel eines erfindungsgemäßen Rotors mit einem Polpaar, einer Schnittebene und einem Blechpaket mit Blechungsrichtung in axialer Richtung des Rotors,
- Figur 3:: eine Schnittansicht auf ein drittes Ausführungsbeispiel eines erfindungsgemäßen Rotors mit einem Polpaar, zwei Schnittebenen und zwei Blechpaketen mit Blechungsrichtung parallel zu den Normalen der Schnittebenen,
- Figur 4:: axiale Schnittansichten auf das dritte Ausführungsbeispiel, gezeigt in Figur 3,
- Figur 5:: eine Schnittansicht auf ein viertes Ausführungsbeispiel eines erfindungsgemäßen Rotors mit zwei Polpaaren, zwei Schnittebenen und vier Blechpaketen mit Blechungsrichtungen parallel zu den Normalen der Schnittebene,
- Figur 6:: eine Schnittansicht auf ein fünftes Ausführungsbeispiel eines erfindungsgemäßen Rotors mit zwei Polpaaren, zwei Schnittebenen und einem Blechpaket mit Blechungsrichtung in axialer Richtung des Rotors,
- Figur 7:: eine schematische Schnittansicht auf ein fünftes Ausführungsbeispiel eines erfindungsgemäßen Rotors, der als vierpoliger Halbach-Rotor ausgebildet ist.

In den folgenden Abbildungen sind gleiche Teile mit gleichen Bezugszeichen versehen. Sofern eine Figur Bezugszeichen enthält, auf die in der zugehörigen Figurenbeschreibung nicht explizit eingegangen wird, wird auf vorherige oder nachfolgende Figurenbeschreibungen verwiesen. Die Figuren zeigen lediglich Schnittansichten von Ausführungsbeispielen erfindungsgemäßer Rotoren. Die anderen Bestandteile des ebenfalls beanspruchten Elektromotors werden in den Figuren nicht gezeigt. Zu den Bestandteilen des erfindungsgemäßen Elektromotors wird auf die allgemeine Beschreibung verwiesen.

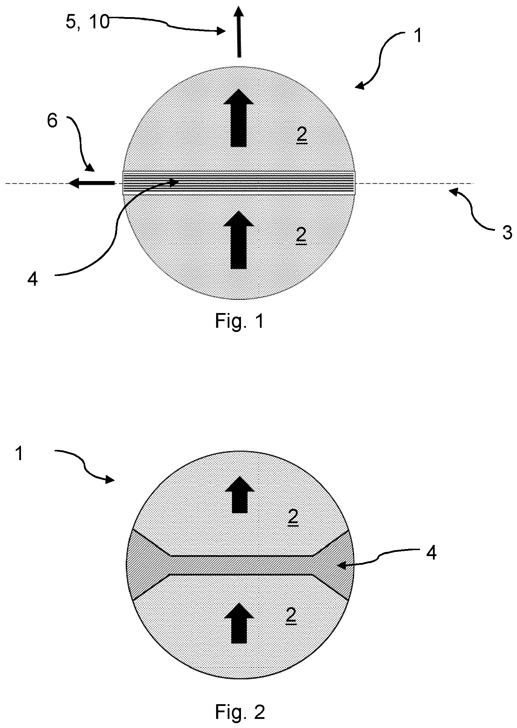

Figur 1 zeigt eine Schnittansicht eines ersten Ausführungsbeispiels eines erfindungsgemäßen Rotors 1 innerhalb eines axialen Bereichs 8 des Rotors 1, in dem dieser in mehrere Permanentmagnetsegmente 2 geteilt ist. Der Rotor 1 weist in dem axialen Bereich 8 dabei zwei Permanentmagnetsegmente 2 auf, deren Magnetisierungsrichtungen als dicke schwarze Pfeile eingezeichnet sind und die ein ein-polpaariges Magnetfeld ausbilden. Die Magnetisierungsrichtung ist auch durch die d-Achse 5 des Rotors 1 gekennzeichnet. Die zwei Permanentmagnetsegmente 2 sind voneinander entlang einer Schnittebene 3 beabstandet. Die Schnittebene 3 weist dabei eine Normale 10 auf, die senkrecht zur axialen Richtung des Rotors 1 und senkrecht zur q-Achse 6 des Rotors 1 ausgerichtet ist. Zwischen den zwei Permanentmagnetsegmenten 2 ist entlang der Schnittebene 3 weichmagnetisches Material in der Form eines Blechpakets 4 eingebracht, wobei das Blechpaket 4 dieser Ausführungsform eine Blechungsrichtung parallel zu der Normalen 10 der Schnittebene 3 aufweist und acht Bleche aufweist. Es können alternativ vorzugsweise auch weniger Bleche, beispielsweise weniger als fünf Bleche verwendet werden. Die zwei Permanentmagnetsegmente 2 und das Blechpaket 4 sind voneinander durch eine elektrische Isolierung voneinander elektrisch isoliert. Durch die elektrische Isolierung zwischen den Permanentmagnetsegmenten 2 entlang der Schnittebene 3 werden PWM-induzierte Wirbelströme verhindert, die sich insbesondere bei elektronisch kommutierten Elektromotoren mit nutenlosen Statoren besonders stark bilden und negativ auf den Betrieb eines derartigen Elektromotors auswirken. Durch das Blechpaket 4 wird die Induktivität in der q-Achse 6 zudem vergrößert, wodurch der Stromrippel reduziert und dadurch die Wirbelströme zusätzlich reduziert werden können.

Figur 2 zeigt eine Schnittansicht im axialen Bereich 8 eines zweiten Ausführungsbeispiels eines erfindungsgemäßen Rotors 1. Der wesentliche Unterschied zum ersten Ausführungsbeispiel besteht darin, dass das Blechpaket eine Blechungsrichtung in axialer Richtung des Rotors 1 aufweist und die Ausdehnung des Blechpakets 4 in Richtung der Normalen 10 auf der Schnittebene 3 zu den Außenumfängen des Rotors 1 zunimmt. Dadurch kann zum einen mehr hochfrequentes Feld in das axiale Blechpaket 4 geleitet werden und zum anderen werden hierdurch die Bleche des Blechpakets 4 durch einen Formschluss im Verhältnis zu den Permanentmagnetsegmenten 2 positioniert. Auch für dieses Ausführungsbeispiel ist es wichtig, dass das Blechpaket 4 gegenüber den Permanentmagnetsegmenten 2 durch eine elektrische Isolierung elektrisch isoliert ist.

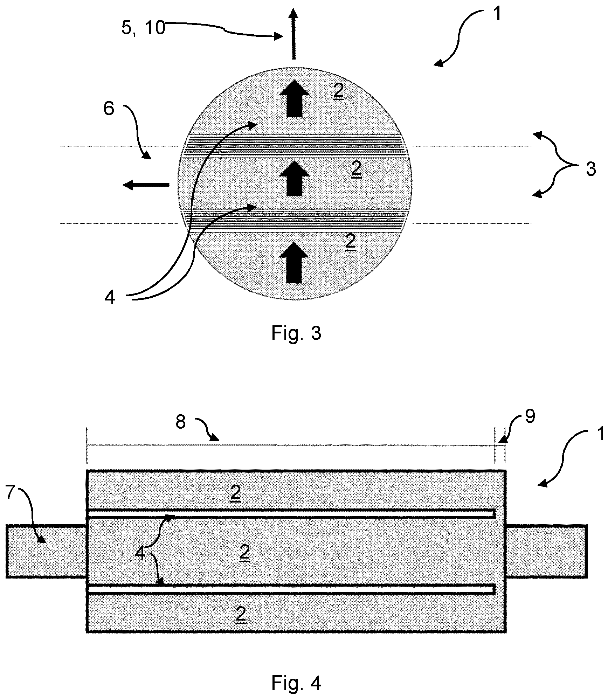

Figur 3 zeigt eine Schnittansicht im axialen Bereich 8 eines dritten Ausführungsbeispiels eines erfindungsgemäßen Rotors 1, wobei dieser Rotor 1 drei Permanentmagnetsegmente 2 aufweist, die alle die gleiche Magnetisierungsrichtung haben und somit ein ein-polpaariges Magnetfeld ausbilden. Die Permanentmagnetsegmente 2 sind voneinander entlang zwei Schnittebenen 3 beabstandet, die jeweils Normalen 10 aufweisen, die senkrecht zur axialen Richtung des Rotors 1 und senkrecht zur q-Achse 6 des Rotors 1 ausgerichtet sind. Die Schnittebenen 3 sind dabei achsensymmetrisch zur q-Achse 6 im Rotor angeordnet. Zwischen den Permanentmagnetsegmenten 2 entlang den Schnittebenen 3 sind wiederum Blechpakete 4 eingebracht, wobei die Blechpakete 4 gegenüber den jeweils angrenzenden Permanentmagnetsegmenten 2 durch eine elektrische Isolierung elektrisch isoliert sind.

Die Figur 4 zeigt eine axiale Schnittansicht eines Rotors 1, die eine Schnittansicht im axialen Bereich 8, wie das dritte Ausführungsbeispiel, gezeigt in Figur 3, aufweist. Dabei ist der Rotor 1 im axialen Bereich 8 segmentiert und weist 3 Permanentmagnetsegmente 2 auf, die von zwei Schnittebenen geteilt sind. Diese Segmentierung ist aber nicht über die gesamte axiale Länge des Rotors 1 gegeben. So weist das Ausführungsbeispiel in Figur 4 an einem axialen Ende einen Endabschnitt 9 auf, in dem die Permanentmagnetsegmente 2 nicht voneinander getrennt sind. In dem Endabschnitt 9 kann der Permanentmagnet einstückig ausgebildet sein, sodass die Stabilität des Rotors 1 gesteigert werden kann. Da der axiale Bereich 8 mit der Segmentierung in mehrere Permanentmagnetsegmente 2 einen Großteil der axialen Länge, vorzugsweise mindestens 90 % der axialen Länge, umfasst, können die PWM-induzierten Wirbelströme dennoch ausreichend vermindert werden. An den jeweiligen axialen Enden des in Figur 4 gezeigten Rotors 1 sind jeweils Wellenstummel aufgeklebt, die zusammen mit dem segmentierten Permanentmagnet die Welle 7 des Rotors 1 bilden.

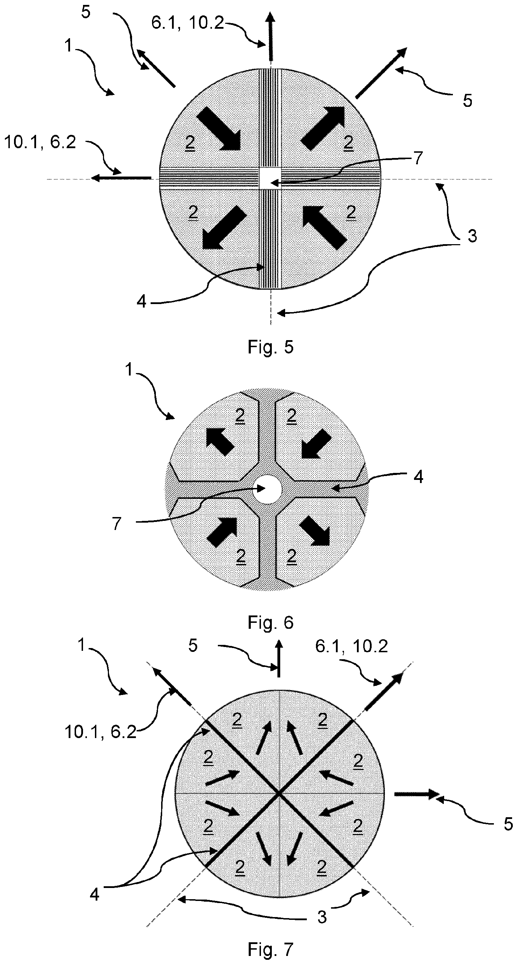

Figur 5 zeigt eine Schnittansicht eines weiteren Ausführungsbeispiels eines erfindungsgemäßen Rotors 1, wobei dieser Rotor 1 ein zwei-polpaariger Rotor ist. Der Rotor 1 weist dabei vier Permanentmagnetsegmente 2 auf, die gemäß den dicken schwarzen Pfeilen magnetisiert sind. Die Permanentmagnetsegmente 2 sind entlang von zwei Schnittebenen 3 voneinander beabstandet, wobei die Normalen 10.1 der Schnittebenen 3 jeweils senkrecht zur axialen Richtung des Rotors 1 und senkrecht zu den möglichen q-Achsen 6.1, 6.2 des Rotors 1 ausgerichtet sind. Die Bleche sind in Richtung der q-Achse 6, 6.1, 6.2 angeordnet, dies bedeutet, dass die q-Achse 6, 6.1, 6.2 in der Blechebene liegt. Die d-Achse 5 stehen jeweils elektrisch senkrecht zu der q-Achse 6, 6.1, 6.2. Bei einem einpolpaarigen Motor stehen die d-Achse 5 jeweils sowohl elektrisch wie auch mechanisch beziehungsweise geometrisch senkrecht zu der q-Achse 6 und damit parallel zu der Normalen 10. Bei mehrpolpaarigen Rotoren gibt es entsprechend der Anzahl Polpaare mehrere d-Achse 5 und q-Achse 6.1, 6.2. Die d-Achsen 5 und q-Achsen 6.1, 6.2 stehen dabei jeweils elektrisch senkrecht in einem 90° Winkel zueinander. Der mechanische Winkel zwischen den d-Achsen 5 und den q-Achsen 6.1, 6.2 entspricht dagegen der Hälfte von 360° geteilt durch die Anzahl der Pole. Bei einem zwei polpaarigen Rotor 1 ergibt sich somit ein mechanischer Winkel zwischen der d-Achse 5 und der q-Achse 6.1, 6.2 von 360°/2/4 = 45°. Bei einem dreipolpaarigen Rotor 1 ergibt sich ein mechanischer Winkel zwischen der d-Achse und der q-Achse von 360°/2/6 = 30°. Entlang den Schnittebenen 3 ist weichmagnetisches Material in der Form von Blechpaketen 4, die eine Blechungsrichtung parallel zu den normalen der Schnittebenen aufweisen, eingebracht. Die Blechpakete 4 sowie die Permanentmagnetsegmente 2 sind voneinander durch elektrische Isolierung isoliert. Zwischen den Blechpaketen 4 im Zentrum des Rotors 1 ist keine Welle des Rotors 1 vorgesehen. In einer alternativen Ausführung kann eine Welle aus einem elektrisch nicht leitenden Material angeordnet sein.

Auch Figur 6 zeigt eine Schnittansicht eines weiteren Ausführungsbeispiels eines erfindungsgemäßen Rotors 1, der als zwei-polpaariger Rotor 1 ausgeführt ist. Im Gegensatz zu dem Ausführungsbeispiel gezeigten Figur 5 weist dieses Ausführungsbeispiel ein Blechpaket 4 mit Blechungsrichtung in axialer Richtung des Rotors 1 auf, welches entlang den Schnittebenen 3 zwischen den Permanentmagnetsegmenten 2 eingebracht ist. Die Ausdehnung des Blechpakets 4 in Richtung der Normalen 10 der Schnittebenen 3 nimmt am Außenumfang des Rotors zu, wodurch zum einen mehr hochfrequentes Feld in das axiale Blechpaket 4 geleitet werden kann und die Bleche des Blechpakets 4 zueinander und zu den Permanentmagnetsegmenten 2 positioniert werden. In dem in Figur 6 gezeigten Ausführungsbeispiel wird eine Welle 7 des Rotors 1 durch das axiale Blechpaket 4 geführt. Die Welle 7 weist bei dieser Ausführung einen Durchmesser auf, welcher grösser ist als der minimale Abstand der Permanentmagnetsegmente 2 entlang der Schnittebenen 3. Das Feld wird hierbei um die Welle 7 herum geführt.

Figur 7 zeigt eine Schnittansicht durch ein weiteres Ausführungsbeispiel eines erfindungsgemäßen Rotors 1, wobei es sich bei dem Rotor 1 um ein zwei-polpaarigen Halbach-Rotor 1 handelt, der aus acht Permanentmagnetsegmenten 2 mit als schwarze Pfeile markierten Magnetisierungsrichtungen ausgebildet ist. Auch diese Permanentmagnetsegmente 2 sind entlang von zwei Schnittebenen 3 voneinander mittels einer elektrischen Isolierung beabstandet, wobei die Normalen 10.1, 10.2 der Schnittebenen 3 jeweils senkrecht zur axialen Richtung des Rotors 1 und einer jeweiligen q-Achse 6.1, 6.2 des Rotors 1 ausgerichtet sind. Auch entlang dieser Schnittebenen 3 kann weichmagnetisches Material in der Form von Blechpaketen 4 eingebracht sein, wobei die Blechpakete 4 wiederum gegenüber den Permanentmagnetsegmenten 2 durch eine elektrische Isolierung isoliert sind.

Für die oberhalb beschriebenen Ausführungsbeispiele gilt jeweils das die elektrische Isolierung unter anderem mittels eines Luftspalts, eines isolierenden Materials, Kunststofffolien oder -plättchen, Papier oder einer Beschichtung wie beispielsweise eines elektrisch isolierten Klebers erzeugt werden können. Auch können die gezeigten Rotoren mittels eines Carbonfaserschlauchs überzogen und mittels Kunstharz laminiert werden oder mittels einer Keramikhülse überzogen werden, sodass die Stabilität des Rotors 1 erhöht werden kann. Dabei ist es wichtig, dass diese Art der Kapselung nicht elektrisch leitfähig ist, da dadurch der Effekt der Segmentierung aufgehoben werden würde.

### Bezugszeichenliste

- 1: Rotor
- 2: Permanentmagnetsegment
- 3: Schnittebene
- 4: Blechpaket
- 5: d-Achse
- 6, 6.1, 6.2: q-Achse
- 7: Welle
- 8: axialer Bereich
- 9: Endabschnitt
- 10, 10.1, 10.2: Normale

## Patentansprüche

1. Rotor (1) für einen Elektromotor mit einem nutenlosen Stator und einer elektronischen Kommutierung, wobei der Rotor (1) Permanentmagnetsegmente (2) aufweist, **dadurch gekennzeichnet, dass** die Permanentmagnetsegmente (2) zumindest über einen axialen Bereich (8) des Rotors (1) entlang zumindest einer Schnittebene (3) voneinander beabstandet sind und der Rotor (1) zwischen den Permanentmagnetsegmenten (2) entlang der zumindest einen Schnittebene (3) jeweils eine elektrische Isolierung aufweist, wobei eine Normale (10, 10.1, 10.2) der jeweiligen Schnittebene (3) senkrecht zur axialen Richtung des Rotors (1) und senkrecht zu einer q-Achse (6) des Rotors (1) verläuft, in einem Fall, dass der Rotor (1) ein Polpaar aufweist, und senkrecht zu einer von mehreren q-Achsen (6.1, 6.2) des Rotors (1) verläuft, in einem Fall, dass der Rotor (1) mehr als ein Polpaar aufweist.

2. Rotor (1) nach Anspruch 1, **dadurch gekennzeichnet, dass** die elektrische Isolierung mittels eines Luftspalts, eines isolierenden Materials, wie vorzugsweise einer Vergussmasse, Kunststofffolien oder -plättchen, Papier oder einer Beschichtung, wie vorzugsweise eines elektrisch isolierenden Klebers, erzeugt ist.

3. Rotor (1) nach Anspruch 1 oder 2, **dadurch gekennzeichnet, dass** zwischen den Permanentmagnetsegmenten (2) entlang der Schnittebene/n (3) ein weichmagnetisches Material eingebracht ist, dass mittels der elektrischen Isolierung von den Permanentmagnetsegmenten (2) elektrisch isoliert ist.

4. Rotor (1) nach Anspruch 3, **dadurch gekennzeichnet, dass** das weichmagnetische Material als Blech oder Blechpaket (4) ausgeführt ist, wobei eine Blechungsrichtung entweder parallel zu der Normalen (10, 10.1, 10.2) der jeweiligen Schnittebene (3) oder in axialer Richtung des Rotors (1) verläuft.

5. Rotor (1) nach Anspruch 3 oder 4, **dadurch gekennzeichnet, dass** eine Sättigungsfeldstärke des weichmagnetischen Materials über der Flussdichte des Rotors (1) liegt, wobei vorzugsweise das weichmagnetische Material aus FeSi-Blechen, aus FeNi-Blechen oder aus einem Soft Magnetic Composite besteht.

6. Rotor (1) nach einem der Ansprüche 3 bis 5, **dadurch gekennzeichnet, dass** ein Abstand zwischen den Permanentsegmenten (2) in Richtung der Normalen (10, 10.1, 10.2) der jeweiligen Schnittebene (3) über mindestens 50% der Ausdehnung der Schnittebene (3) parallel zu der q-Achse (6, 6.1, 6.2) innerhalb eines Außenumfangs des Rotors (1) weniger als 8%, vorzugsweise weniger als 5%, des Rotordurchmessers beträgt.

7. Rotor (1) nach einem der Ansprüche 4 bis 6, **dadurch gekennzeichnet, dass** das Blechpaket (4) die Blechungsrichtung parallel zu der Normalen (10, 10.1, 10.2) der jeweiligen Schnittebene (3) und weniger als neun, vorzugsweise weniger als fünf, Bleche aufweist.

8. Rotor (1) nach einem der Ansprüche 4 bis 6, **dadurch gekennzeichnet, dass** das Blechpaket (4) die Blechungsrichtung in axialer Richtung des Rotors (1) aufweist und sich eine Ausdehnung des Blechpakets (4) in Richtung der Normalen (10, 10.1, 10.2) der jeweiligen Schnittebene (3) am Außenumfang des Rotors (1) vergrößert.

9. Rotor (1) nach einem der Ansprüche 1 bis 8, **dadurch gekennzeichnet, dass** der Rotor (1) nur ein Polpaar und mehr als zwei, vorzugsweise drei, Permanentmagnetsegmente (2) aufweist, wobei die Schnittebenen (3) vorzugsweise achsensymmetrisch zur q-Achse (6) des Rotors (1) angeordnet sind.

10. Rotor (1) nach einem der Ansprüche 1 bis 8, **dadurch gekennzeichnet, dass** der Rotor (1) mehr als ein Polpaar aufweist und die Schnittebenen (3) des Rotors (1) entlang der q-Achsen (6) des Rotors (1) verlaufen.

11. Rotor (1) nach einem der Ansprüche 1 bis 10, **dadurch gekennzeichnet, dass** die Permanentmagnetsegmente (2) elektrisch isoliert zueinander verklebt sind.

12. Rotor (1) nach einem der Ansprüche 1 bis 11, **dadurch gekennzeichnet, dass** Wellenstummel an die Stirnseiten des Rotors (1) geklebt sind.

13. Rotor (1) nach einem der Ansprüche 1 bis 12, **dadurch gekennzeichnet, dass** der Rotor (1) mit einer elektrisch nicht leitfähigen Kapselung umgeben ist, wobei diese vorzugsweise ein Carbonfaserschlauch oder einer Keramikhülse ist oder aus einer Kunstharz-Laminierung der Außenfläche besteht.

14. Rotor (1) nach einem der Ansprüche 1 bis 13, **dadurch gekennzeichnet, dass** der axiale Bereich (8), bei welchem die Permanentmagnetsegmente (2) voneinander beabstandet sind, nur einen Teilbereich der gesamten Achslänge des Rotors (1) ausmacht und die Permanentmagnetsegmente (2) an einem axialen Ende des Rotors (1) in einem Endabschnitt (9), der vorzugsweise weniger als 10 %, besonders vorzugsweise weniger als 5%, der axialen Länge des Rotors (1) aufweist, unsegmentiert ausgeführt ist.

15. Elektromotor mit einem nutenlosen Stator und einer elektronischen Kommutierung, **dadurch gekennzeichnet, dass** der Elektromotor einen Rotor (1) nach einem der Ansprüche 1 bis 14 aufweist.
